(19) **Europäisches Patentamt / European Patent Office / Office européen des brevets**

(11) **EP 3 020 617 B1**

(12) **EUROPEAN PATENT SPECIFICATION**

(45) Date of publication and mention
of the grant of the patent:
**03.06.2020 Bulletin 2020/23**

(21) Application number: **14823294.5**

(22) Date of filing: **03.07.2014**

(51) Int Cl.:
**B62D 6/00** *(2006.01)* **B62D 5/04** *(2006.01)*
**B62D 101/00** *(2006.01)* **B62D 119/00** *(2006.01)*

(86) International application number:
**PCT/JP2014/067807**

(87) International publication number:
**WO 2015/005222 (15.01.2015 Gazette 2015/02)**

(54) **ELECTRIC POWER STEERING CONTROL DEVICE**

STEUERUNGSVORRICHTUNG FÜR EINE ELEKTRISCHE SERVOLENKUNG

DISPOSITIF DE COMMANDE DE DIRECTION ASSISTÉE ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.07.2013 JP 2013142583**

(43) Date of publication of application:
**18.05.2016 Bulletin 2016/20**

(73) Proprietor: **NSK Ltd.
Tokyo 141-8560 (JP)**

(72) Inventors:
• **TSUBAKI, Takahiro
Maebashi-shi
Gunma 371-8527 (JP)**
• **KITAZUME, Tetsuya
Maebashi-shi
Gunma 371-8527 (JP)**

• **SHIMOKAWABE, Satoshi
Maebashi-shi
Gunma 371-8527 (JP)**

(74) Representative: **Schmitt-Nilson Schraud Waibel
Wohlfrom
Patentanwälte Partnerschaft mbB
Pelkovenstraße 143
80992 München (DE)**

(56) References cited:
EP-A1- 1 975 040      JP-A- 2004 161 073
JP-A- 2006 188 183      JP-A- 2006 188 183
JP-A- 2008 254 729      JP-A- 2008 254 729
JP-A- 2009 101 885      JP-A- 2009 208 589
JP-A- 2011 111 080

**Description**

Technical Field

The present invention relates to an electric power steering control unit that PI-controls a current command value calculated based on at least a steering torque, and provides a steering system of a vehicle with a steering assist force generated by a motor, and in particular to an electric power steering control unit that suppresses in a case that the vibration of the vibration suppression target object, such as a steering wheel (handle), the current command value and a motor speed, continues during a predetermined time or more than the predetermined time within a scope of a predetermined frequency and further improves a steering feeling for a driver.

Background Art

An electric power steering apparatus that energizes a steering apparatus of a vehicle by using a rotational torque of a motor as an assist torque, applies a driving force of the motor as the assist torque to a steering shaft or a rack shaft by means of a transmission mechanism such as gears or a belt through a reduction mechanism. A conventional electric power steering apparatus (EPS) performs a feedback control of the motor current in order to accurately generate a torque of an assist force. The feedback control adjusts a current supplied to the motor so that a difference between a steering assist command value (a current command value) and a detected motor current value becomes small, and the adjustment of the current applied to the motor is generally performed by an adjustment of a duty ratio of a pulse width modulation (PWM) control.

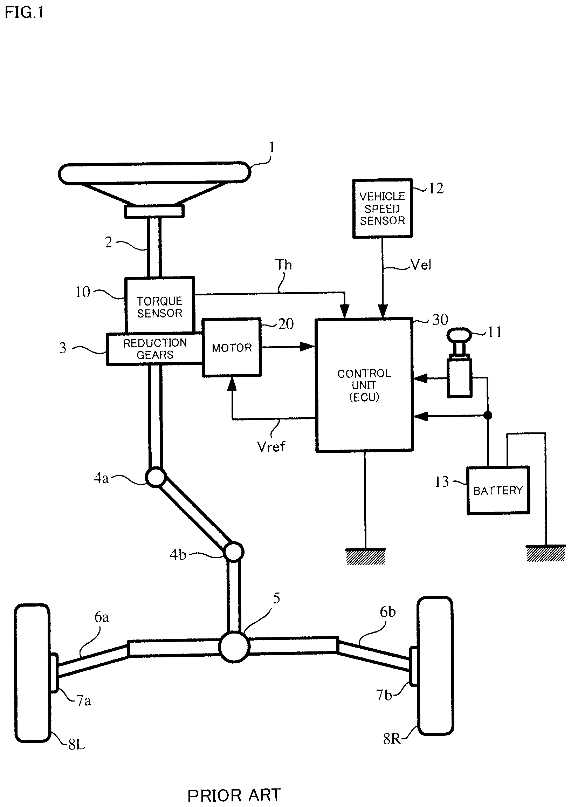

A general configuration of a conventional electric power steering apparatus will be described with reference to FIG.1. As shown in FIG.1, a column shaft (a steering shaft) 2 connected to a steering wheel (handle) 1, is connected to steered wheels 8L and 8R through reduction gears 3, universal joints 4a and 4b, a rack and pinion mechanism 5, and tie rods 6a and 6b, further via hub units 7a and 7b. Further, the column shaft 2 is provided with a torque sensor 10 for detecting a steering torque of the steering wheel 1, and a motor 20 for assisting the steering force of the steering wheel 1 is connected to the column shaft 2 through the reduction gears 3. Electric power is supplied to a control unit (ECU) 30 for controlling the electric power steering apparatus from a battery 13, and an ignition key signal is inputted into the control unit 30 through an ignition key 11. The control unit 30 calculates a current command value of an assist (steering assist) command based on a steering torque Th detected by the torque sensor 10 and a vehicle speed Vel detected by a vehicle speed sensor 12, and controls a current supplied to the motor 20 based on a voltage command value Vref obtained by performing compensation and so on with respect to the current command value in a current control section. Furthermore, it is also possible to receive the vehicle speed Vel from a controller area network (CAN) and so on.

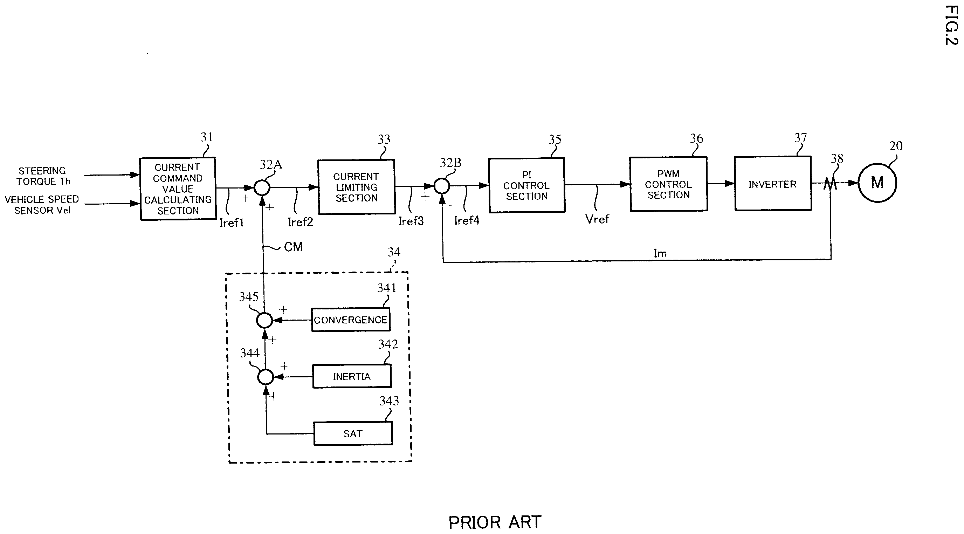

The control unit 30 mainly comprises a CPU (or an MPU or an MCU), and general functions performed by programs within the CPU are shown in FIG.2.

Functions and operations of the control unit 30 will be described with reference to FIG.2. As shown in FIG.2, the steering torque Th detected by the torque sensor 10 and the vehicle speed Vel detected by the vehicle speed sensor 12 are inputted into a current command value calculating section 31. The current command value calculating section 31 decides a current command value Iref1 that is a desired value of the current supplied to the motor 20 based on the steering torque Th and the vehicle speed Vel and by means of an assist map and so on. The current command value Iref1 is added in an adding section 32A and then the added value is inputted into a current limiting section 33 as a current command value Iref2. A current command value Iref3 that is limited the maximum current, is inputted into a subtracting section 32B, and a deviation Iref4 (=Iref3-Im) between the current command value Iref3 and a motor current value Im that is fed back, is calculated. The deviation Iref4 is inputted into a PI control section 35 serving as the current control section. The voltage command value Vref that a characteristic improvement is performed in the PI control section 35, is inputted into a PWM control section 36. Furthermore, the motor 20 is PWM-driven through an inverter 37 serving as a drive section. The current value Im of the motor 20 is detected by a motor current detector 38 and is fed back to the subtracting section 32B. In general, the inverter 37 uses EFTs as switching elements and is comprised of a bridge circuit of FETs.

Further, a compensation signal CM from a compensation section 34 is added in the adding section 32A, and the compensation of the system is performed by the addition of the compensation signal CM so as to improve a convergence, an inertia characteristic and so on. The compensation section 34 adds a self-aligning torque (SAT) 343 and an inertia 342 in an adding section 344, further adds the result of addition performed in the adding section 344 and a convergence 341 in an adding section 345, and then outputs a result of addition performed in the adding section 345 as the compensation signal CM.

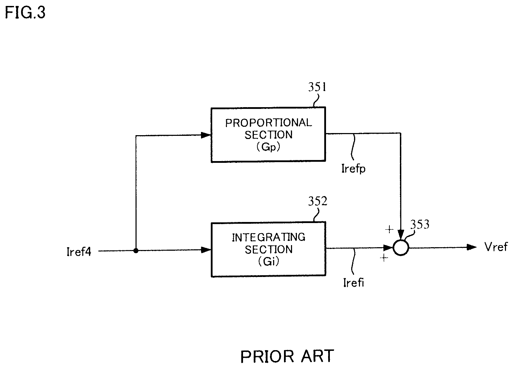

Furthermore, as shown in FIG.3, the PI control section 35 comprises a proportional section 351 to proportional-control the current command value Iref4 with a proportional gain Gp, an integrating section 352 to integrate the current command value Iref4 with an integration gain Gi, and an adding section 353 to add an output Irefp of the proportional section 351 and an output Itefi of the integrating section 352 and to output the voltage control command value Vref (=Irefp+Irefi).

The CPU (micro-computer) in such the electric steering apparatus generates the voltage control command for controlling the motor by the PI control as stated above. The gains of the PI control are adjusted to accommodate values in accordance with the kinds of the vehicles.

When the gain of the PI control becomes greater, a noisy sound and a vibration due to the noises occur. In this connection, it is necessary to limit not to occur the vibration and the noisy sound. However, if the gain of the PI control is limited, the frequency characteristic of the current control falls and it is impossible to improve the responsibility of the steering assist. Further, even if the gain of the PI control is sufficiently decreased, it is impossible to perfectly avoid the vibration in a vicinity of a resonance frequency of the steering system and a comfortable feeling is not necessarily obtained.

In order to dissolve such problems, for example, an electric power steering apparatus disclosed in Japanese Published unexamined Patent Application No.2006-188183 A (Patent Document 1) is proposed. That is, the electric power steering apparatus of Patent Document 1 comprises a vibration detecting means detects the vibration of the steering members, and a gain changing means for falling either one of the proportional gain and the integration gain of the PI control when the vibration of the steering members is detected by the vibration detecting means.

The List of Prior Art Documents

Patent Documents

Patent Document 1: Japanese Published unexamined
Patent Application No.2006-188183 A

Summary of the Invention

Problems to be Solved by the Invention

However, since the electric power steering apparatus disclosed in Patent Document 1 does not extract the vibration wave-form for the handle vibration suppression, it is necessary to calculate and process for all frequency range. Therefore, there is a problem that the processing capacity becomes large. Further, since the extraction of the handle vibration wave-form is carried out by a differential peak-hold processing or the like and the gain is changed as the vibration continuation when an inter-peak value exceeds a predetermined threshold, it is necessary to accurately detect the inter-peak distance. Accordingly, there is a problem that the calculation capacity becomes large.

Furthermore, as the vibration components, although there are the vibrations of the current command value, the motor speed and so on except for the torque of the handle (steering wheel), the countermeasure for the vibration is not entirely disclosed in Patent Document 1.

The present invention has been developed in view of the above-described circumstances, and an object of the present invention is to provide an electric power steering control unit that detects the vibration components of the vibration suppression target object such as the handle and current command value based on an expression of Fourier series of which calculation capacity is small, changes a gain of the PI control section at only a time when the vibration of the predetermined frequency continues during the predetermined time or more than the predetermined time and suppresses the vibration, and improves the steering feeling.

Means for Solving the Problems

The present invention relates to an electric power steering control unit that PI-controls a current command value calculated based on at least a steering torque, and drive-controls a motor by means of a control command value which is PI-controlled and assist-controls a steering, comprising: a vibration detecting section to detect a vibration of a vibration suppression target object and outputs a vibration signal; a continuation-time judging section to output a continuation signal when said vibration signal continues equal to or more than a predetermined time; and a gain setting section to change a gain of said PI-control based on said continuation signal; wherein a vibration suppression of said vibration suppression target object is performed in a continuation of a predetermined frequency of said vibration signal and being equal to or more than said predetermined time.

Further, the above-described object of the present invention is more effectively achieved by that wherein said vibration detecting section comprising: a band pass filter (BPF) to extract a predetermined frequency of said vibration suppression target object; a sin-wave generating section to generate a sin-wave; a cos-wave generating section to generate a cos-wave; a first multiplying section to multiply said sin-wave with a vibration suppression target object signal which is processed in said BPF; a second multiplying section to multiply said vibration suppression target object signal with said cos-wave; a first integrating section to integrate a first multiplied signal from said first multiplying section; a second integrating section to integrate a second multiplied signal from said second multiplying section; a first squaring section to square a first integration signal from said first integrating section; a second squaring section to square a second integration signal from said second integrating section; and an adding section to add a first multiplied signal from said first squaring section and a second multiplied signal from said second squaring section and to output said vibration signal; or by that wherein said first integrating section and said second integrating section are initialized at a predetermined period; or by that wherein said BPF extracts a vibration frequency of 5~20 Hz; or by that wherein said vibration suppression target object is said steering torque, said current command value and a motor speed of said motor; or by that wherein said gain to be changed of said PI-control is a proportional gain or an integral gain; od by that wherein said gain to be changed of said PI-control is a proportional gain and an integral gain.

Effects of the Invention

According to an electric power steering control unit of the present invention, since the control unit extracts only the predetermined frequency component of the vibration suppression target object, such as the steering torque, the current command value and the motor speed, with the band pass filter (BPF) and processes only the extracted frequency component, it is possible to make the capacity of the calculation process small. Further, since the control unit of the present invention bases an expression of Fourier series for the judgment of the vibration continuation and does not use the inter-peak measurement, it is possible to utilize the CPU of which calculation capacity is small and the price is cheap.
Furthermore, the control unit of the present invention determines the minimum value and the maximum value from the sampling data of the past values of the predetermine number and the present value, sets the first condition that plural output values are quite contented in a certain range, and thereafter judges, by comparing with the threshold, the second condition whether or not the predetermined time continues. Therefore, the present invention is capable of simplifying the calculation.

Brief Description of the Drawings

In the accompanying drawings:

FIG.1 is a diagram illustrating a configuration example of a general electric power steering apparatus;
FIG.2 is a block diagram showing an example of a control unit of the control system of the electric power steering apparatus;
FIG.3 is a block diagram showing a configuration example of a PI control section;
FIG.4 is a block diagram showing a configuration example of the present invention;
FIG.5 is a block diagram showing a configuration example of a vibration detecting section;
FIG.6 is a part of a flow chart showing an example of the present invention;

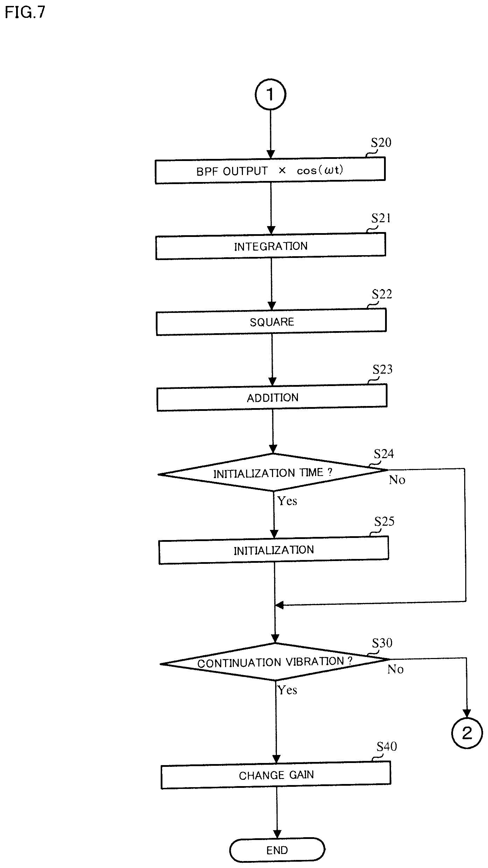

FIG.7 is a part of a flow chart showing an example of the present invention;
FIG.8 is a waveform diagram showing examples of a steering torque and a steering torque after the BPF processing;
FIG.9 is a waveform diagram showing a waveform example after the multiplying the trigonometrical function;
FIG.10 is a waveform diagram showing an examples of an integration waveform being an output of the integrating section;
FIG.11 is a flow chart showing an example to judge the continuation of the vibration; and
FIG.12 is a diagram to explaining the operation to judge the continuation of the vibration

Mode for Carrying Out the Invention

The present invention bases an expression of the Fourier series of which calculation capacity is small, extracts only the vibration component to be necessary for suppressing from a vibration suppression target object such as the handle (steering wheel) and the current command value, and changes a gain (proportional gain, integration gain) of the PI control when the vibration continuation-time exceeds a predetermined time. According to the present invention, for the extracted frequency component, since the gain of the PI control is changed only when the vibration continues during a predetermined time, it is possible to efficiently and economically suppress the vibration of the vibration suppression target object with a small calculation capacity.
Hereinafter, embodiments of the present invention will be described with reference to the accompanying drawings. Although the handle vibration will be described as the vibration suppression target object in the following embodiment, it is possible to similarly apply to the current command value and the motor speed and so on as the vibration suppression target object.

Although the present invention extracts a frequency component for suppressing the handle vibration from the steering torque, the Fourier series shown in the following expression 1 is based. The angular frequency ω [rad/s] is an angular frequency to be extracted and a predetermined period is T.

[Expression 1]

$$a_n = \frac{2}{T} \int_0^T f(t) \cos(\omega t)\, dt \qquad b_n = \frac{2}{T} \int_0^T f(t) \sin(\omega t)\, dt$$

Then, if "2/T" of the expression 1 is disregarded, it is possible to obtain an amplitude component An from the following expression 2.

[Expression 2]

$$A_n = \sqrt{a_n^2 + b_n^2}$$

Further, if the root is removed from the expression 2 in order to simplify the calculation, the following expression 3 is established, it is possible to obtain the amplitude component $A_n^2$.

[Expression 3]

$$A_n^2 = a_n^2 + b_n^2$$

The present invention will be described as a base under the above-explanation.

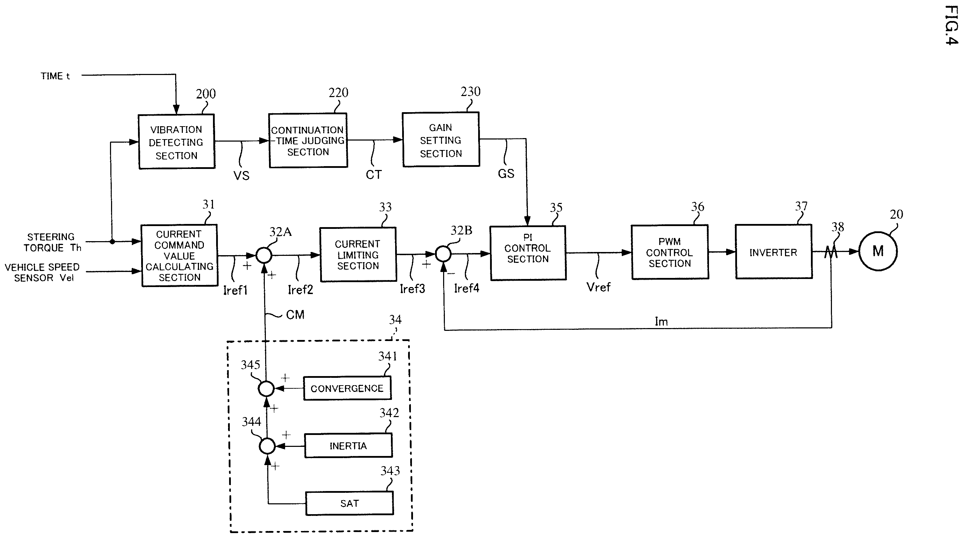

FIG.4 shows a configuration example of the present invention in correspondence to FIG.2. The present invention further comprises a vibration detecting section 200 to detect a vibration of the handle (steering wheel) in a range of a predetermined frequency based on the steering torque Th of the vibration suppression target object, a continuation-time judging section 220 to judge whether the vibration continues more than a predetermined time or not based on a vibration signal VS detected in the vibration detecting section 200, and a gain setting section 230 to output a gain set signal GS for changing a gain (Gp,Gi) of the PI control section 35 based on a continuation signal CT from the continuation-time judging section 220. The changing of the gain of the PI control section may either one of the proportional gain Gp or the integration gain Gi, or may both of the proportional gain Gp and the integration gain Gi.

Besides, the compensation signal CM by means of the compensation signal generating section 34 is not essential in the present invention.

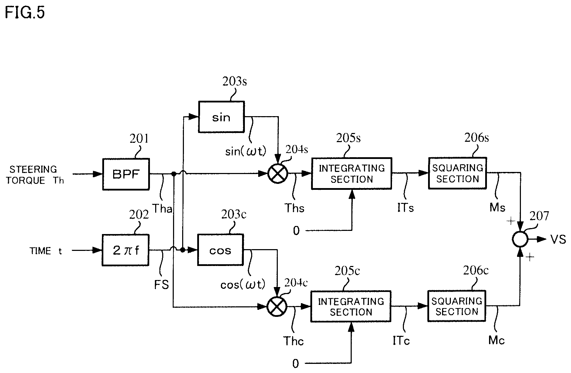

For example, it is assumed that a continuous vibration of 10 [Hz] is included in the steering torque Th. At this time, it is assumed that the continuous vibration state of 10 [Hz] is judged. The configuration of the vibration detecting section 200 is for example shown in FIG.5, a calculation period is for example 1 [ms]. The steering torque Th is inputted into a band pass filter (BPF) 201, and the vibration steering torque Tha as a vibration suppression target object signal such as a low frequency of the offset component and a noise component of a high frequency is inputted into multiplying sections 204s and 204c. An oscillator 202 outputs a frequency signal FS of an angular frequency ω (=2nf) in accordance with a time t, and the frequency signal FS is inputted into a sin-wave generating section 203s and a cos-wave generating section 203c and they respectively generate a sin-wave sin(ωt) and a cos-wave cos(ωt). Besides, "f" is a predetermined frequency 10[Hz].

The sin-wave sin(ωt) is inputted into the multiplying section 204s, and the multiplied signal Ths (=Tha · sin(ωt)) with the vibration steering torque Tha is inputted into an integrating section 205s. The cos-wave cos(ωt) is inputted into the multiplying section 204c, and the multiplied signal Thc (=Tha · cos (ωt)) with the vibration steering torque Tha is inputted into an integrating section 205c. The integrating sections 205s and 205c are respectively reset to an "integrated value = 0" with a predetermined period (e.g. 500[ms]). The integration signal ITs from the integrating section 205s is inputted into a squaring section 206s and squared therein, and the integration signal ITc from the integrating section 205c is inputted into a squaring section 206c and squared therein. The respective squared values Ms and Mc are inputted into an adding section 207 and then are added, and the added value (=Ms+Mc) is outputted as the vibration signal VS.

The vibration signal VS from the vibration detecting section 200 is inputted into the continuation-time judging section 220, and the continuation-time judging section 220 outputs the continuation signal CT when the vibration signal VS continues during a predetermined time (e.g. 1.5[sec]). The continuation signal CT is inputted into the gain setting section 230, and the gain setting section 230 outputs a gain set signal GS for changing the proportional gain Gp and/or the integration gain Gi of the PI control section 35. The PI control section 35 performs the PI control by using the newly set the proportional gain Gp and/or the integration gain Gi.

The operations except for the vibration detecting section 200, the continuation-time judging section 220 and the gain setting section 230 are the same with FIG.2 and the explanation is omitted.

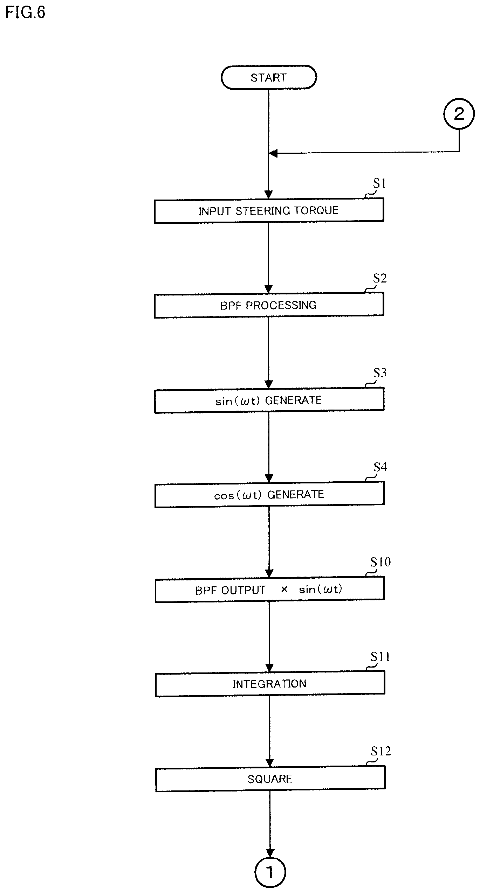

In such a configuration, an operation example of the present invention will be described with reference to flow charts of FIG.6 and GIG.7.

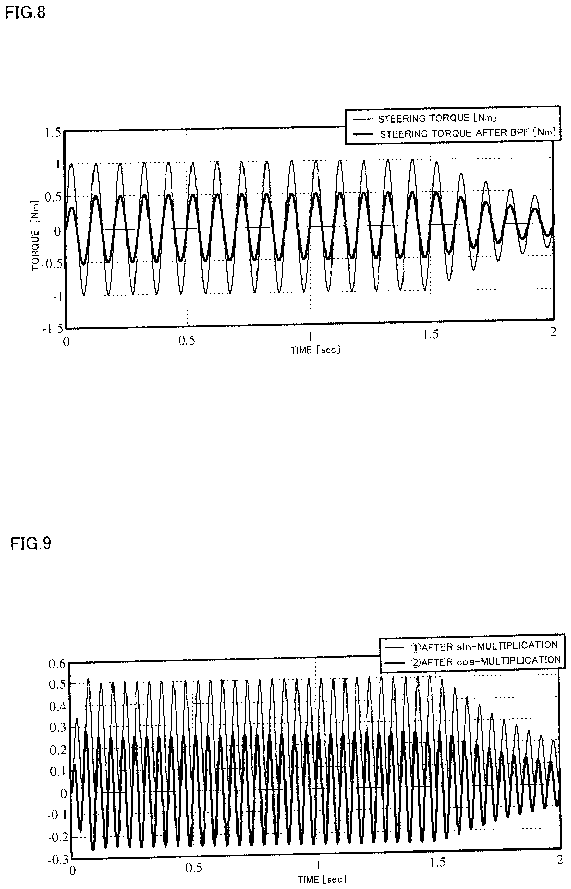

The vibration detecting section 200 inputs the steering torque Th (Step S1), and the BPF 201 within the vibration detecting section 200 extracts the vibration component of the predetermined frequency (e.g. 5~20 [Hz])(Step S2). FIG.8 shows a relation between the steering torque Th [Nm]and the vibration steering torque Tha [Nm] as the vibration suppression target object signal which is BPF-processed in the BPF 201, and it is clear in view of FIG.8 that the signal is BPF-processed. However, in this embodiment, it is assumed that the vibration is the amplitude 1 [Nm] of 10 [Hz], the frequency to be extracted is f=10 [Hz], and the BPF 201 has a primary LPF of 10 [Hz] and a primary HPF 10 [Hz].

On the other hand, the oscillator 202 oscillates the frequency signal FS of the angular frequency $\omega$ (=2nf) and inputs the frequency signal FS into the sin-wave generating section 203s and the cos-wave generating section 203c. The sin-wave generating section 203s generates the sin-wave $\sin(\omega t)$ (Step S3), and the cos-wave generating section 203c generates the cos-wave $\cos(\omega t)$ (Step S4). The sin-wave $\sin(\omega t)$ is inputted into the multiplying section 204s, and the cos-wave $\cos(\omega t)$ is inputted into the multiplying section 204c. Besides, the order of the generations of the sin-wave $\sin(\omega t)$ and the cos-wave $\cos(\omega t)$ is arbitrary.

The multiplying section 204s multiplies the sin-wave $\sin(\omega t)$ with the vibration steering torque Tha which is BPF-processed (Step S10), and the integrating section 205s integrates the multiplied signal Ths (Step S11). The integration signal ITs integrated in the integrating section 205s is inputted into the squaring section 206s and is squared in the squaring section 206s (Step S12). Similarly, the multiplying section 204c multiplies the cos-wave $\cos(\omega t)$ with the vibration steering torque Tha which is BPF-processed (Step S20), and the integrating section 205c integrates the multiplied signal The (Step S21). The integration signal ITc integrated in the integrating section 205c is inputted into the squaring section 206c and is squared in the squaring section 206c (Step S22). Besides, the order of the integrations for the sin-wave $\sin(\omega t)$ and the cos-wave $\cos(\omega t)$ is arbitrary.

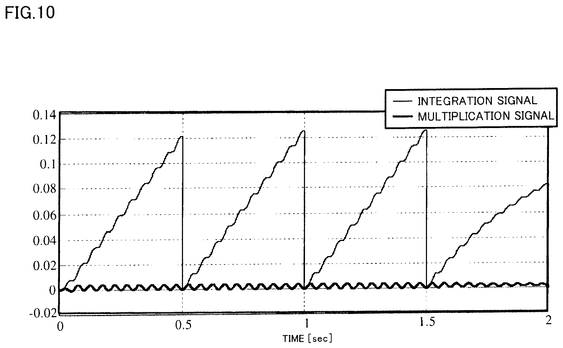

The respective waveforms after the multiplications in the multiplying sections 204s and 204c are shown in FIG.9, a thin line indicates a waveform example of the multiplied signal THs of the sin-wave $\sin(\omega t)$ and a thick line does a waveform example of the multiplied signal THc of the cos-wave $\cos(\omega t)$. FIG.10 shows waveform examples of the multiplied signal THs of the sin-wave $\sin(\omega t)$ and the integration signal ITs being the integrated result of the multiplied signal THs. In the present embodiment, the initialization time is 500 [ms] and it is initialized to "0" at every 500 [ms]. It is the same for the cos-wave $\cos(\omega t)$.

The squared value Ms squared in the squaring section 206s and the squared value Mc squared in the squaring section 206c are inputted into the adding section 207 and added therein (Step S23), it is judged whether the integrating section 205c is an initialization time or not (Step S24). In a case that the integrating section 205c is judged as the initialization time, the integrating section 205c is initialized (Step S25). Thereafter, or in a case that the integrating section 205c is not judged as the initialization time, the vibration signal VS being the added value is inputted into the continuation-time judging section 220 without the initialization and it is judged whether the vibration is continued or not (Step S30). In a case that the vibration is continued, the continuation signal CT is outputted from the continuation-time judging section 220, the gain setting section 230 outputs the gain set signal GS based on the continuation signal CT and changes the proportional gain Gp and/or the integration gain Gi of the PI control section 35 (Step S40). The changings of the proportional gain Gp and/or the integration gain Gi are performed in the directions of the falling, and they may be linear or non-linear, or may be gradually changed.

On the other hand, at the above Step S30, in a case judged that the vibration is not continuous and is temporarily, the process returns to the Step S1 and the above operations are repeated.

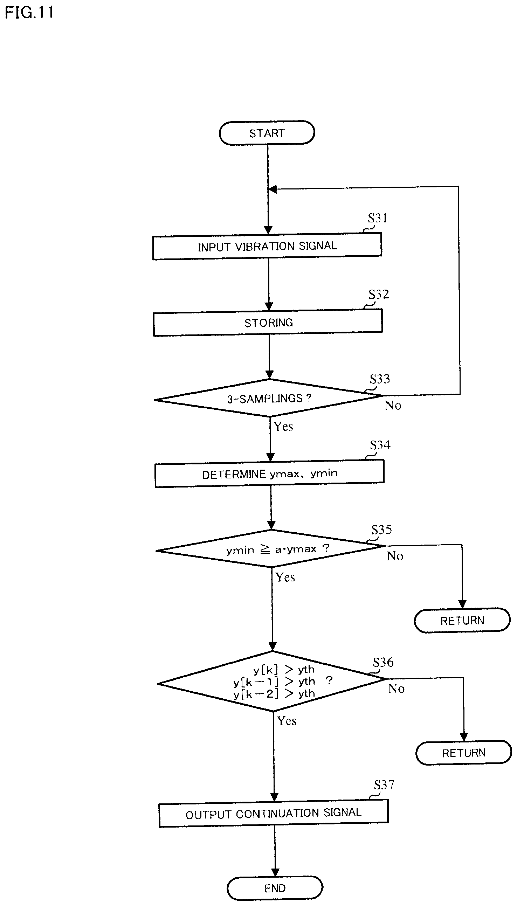

The judgment operation at the Step S30 is in detail performed in accordance with a flow chart of FIG.11.

First, the vibration signal VS being the added value is inputted as the first sampling data (y[k]) (Step S31), and is stored in the memory (not shown) (Step S32). Thereafter, the vibration signal VS is inputted till y[k-2] of the third sampling data (Step S33), at a stage in which the sampling data "y[k], y[k-1], y[k-2]" are inputted, the maximum value ymax and the minimum value ymin are determined among two past values and a present value (Step S34). Then, it is judged whether "ymin$\geqq$ a · ymax" or not as a setting coefficient is "a" (Step S35). The judgment of this first condition is a discrimination whether three output values are relatively within a certain scope or not.

At the judgment of the first condition at the Step S35, in the case of "ymin$\geqq$a · ymax", the second condition is judged whether the respective output values "y[k], y[k-1], y[k-2]" are equal to or more than a predetermined threshold yth (Step S36). In a case that the respective output values "y[k], y[k-1], y[k-2]" are more than the threshold yth, the continuation signal CT is outputted and terminated (Step S37).

At the above judgment on the first condition of the Step S35, in a case that the first condition is not established and "ymin<a · ymax", the process is returned. Further, at the judgment on the second condition of the Step S36, in a case that any one of the "y[k], y[k-1], y[k-2]" is equal to or less than the threshold yth, the process is returned. Besides, the three sampling data are used in this embodiment, the number of the sampling of the past values are optional.

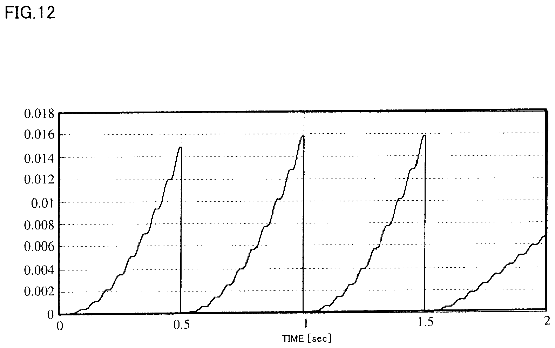

FIG.12 shows the operation example of the integrating section, it is initialized at every 500 [ms] in this embodiment. Just before value of the output value y is y[k], the threshold is yth=0.01 and the set coefficient "a" is 0.8. At a time 1.5 [sec], y[k]=y[3]=0.0159, y[k-1]= y[2]=0.0159, y[k-2] = y[1]=0.0149. Then, since ymax=0.0159 and ymin=0.0149 in this embodiment, the first condition is satisfied. Further, since the respective values are more than the threshold yth, the second condition is also satisfied. Consequently, after 1.5 [sec], the processing is performed for suppressing the vibration and the vibration of the steering torque is converged.

Although the vibration suppression target object is the steering torque Th in the above embodiment-explanation, in the case that suppresses the vibration of the current command value, the similar control is applied by inputting the current command value Iref1 or Iref2 into the vibration detecting section 200. In the case that suppresses the vibration of the motor speed, the similar control is applied by inputting the motor speed signal based on the rotation sensor (e.g. resolver) or the like connected to the motor into the vibration detecting section 200. Further, it is possible to simultaneously control the steering torque Th, the current command value Iref1 or Iref2, the motor speed as the vibration suppression target object.

Furthermore, the renewal period may be equal to or more than three periods of an extracted frequency. The vibration detecting section comprises plural sections which different values are set, and in a case that either one detects the continuous vibration, it may be a continuous vibration detecting state. Further, in the detection of the continuous vibration, the latest output value is compared with a value calculated by the least squares method and so on from the past output values, it may be the continuous vibration detecting state in a case that the value is more than a rate.

Explanation of Reference Numerals

1 handle (steering wheel)
2 column shaft (steering shaft, handle shaft)
10 torque sensor
12 vehicle speed sensor
20 motor
30 control unit (ECU)
31 current command value calculating section
33 current limiting section
35 PI control section
36 PWM control section
37 inverter
200 vibration detecting section
201 band pass filter (BPF)
202 oscillator
203s sin-wave generating section
203c cos-wave generating section
204s,204c multiplying section
205s,205c integrating section
206s,206c squaring section
220 continuation-time judging section
230 gain setting section

**Claims**

1. An electric power steering control unit that Proportional-Integral (PI)-controls a current command value calculated based on at least a steering torque, and drive-controls a motor (20) by means of a control command value which is PI-controlled and assist-controls a steering, comprising:

a vibration detecting section (200) to detect a vibration of a vibration suppression target object and to output a vibration signal;

a continuation-time judging section (220) to output a continuation signal when said vibration signal continues equal to or more than a predetermined time; and

a gain setting section (230) to change a gain of said PI-control based on said continuation signal, **characterized in that**

said vibration detecting section (200) comprises:

a band pass filter (BPF) (201) to extract a predetermined frequency of 5 to 20 Hz of said vibration suppression target object;

a sin-wave generating section (203s) to generate a sin-wave;

a cos-wave generating section (203c) to generate a cos-wave;

a first multiplying section (204s) to multiply said sin-wave with vibration suppression target object signal which is processed in said BPF (201);

a second multiplying section (204c) to multiply said vibration suppression target object signal with said cos-wave;

a first integrating section (205s) to integrate a first multiplied signal from said first multiplying section (204s);

a second integrating section (205c) to integrate a second multiplied signal from said second multiplying section (204c);

a first squaring section (206s) to square a first integration signal from said first integrating section (205s);

a second squaring section (206c) to square a second integration signal from said second integrating section (205c); and

an adding section (207) to add a first multiplied signal from said first squaring section (206s) and a second multiplied signal from said second squaring section (206c) and to output said vibration signal, and

a vibration suppression of said vibration suppression target object is performed in a continuation of the predetermined frequency of 5 to 20 Hz of said vibration signal based on an expression of Fourier series for equal to or more than said predetermined time.

2. An electric power steering control unit according to Claim 1, wherein said first integrating section (205s) and said second integrating section (205c) are initialized at a predetermined period.

3. An electric power steering control unit of Claim 1 or 2, wherein said gain to be changed of said PI-control is a proportional gain or an integral gain.

4. An electric power steering control unit of any one of Claim 1 to 3, wherein said gain to be changed of said PI-control is a proportional gain and an integral gain.


**Patentansprüche**

1. Steuereinheit für eine elektrische Servolenkung, die einen aktuellen Befehlswert, der auf der Basis mindestens eines Lenkmoments berechnet wird, proportional-integral- (PI-) steuert und einen Motor (20) mittels eines Steuerbefehlswerts antriebsmäßig steuert, der PI-gesteuert ist und eine Lenkung unterstützend steuert, aufweisend:

einen Schwingungsdetektionsabschnitt (200) zum Detektieren einer Schwingung eines Schwingungsunterdrückungs-Zielobjekts und zum Abgeben eines Schwingungssignals;

einen Fortsetzungszeit-Beurteilungsabschnitt (220) zum Abgeben eines Fortsetzungssignals, wenn sich das Schwingungssignal gleich oder länger als eine vorbestimmte Zeit fortsetzt; und

einen Verstärkungseinstellabschnitt (230) zum Ändern einer Verstärkung der PI-Steuerung auf des Basis des Fortsetzungssignals,
**dadurch gekennzeichnet,**
**dass** der Schwingungsdetektionsabschnitt (200) aufweist:

ein Bandpassfilter (BPF) (201) zum Extrahieren einer vorbestimmten Frequenz von 5 bis 20 Hz des Schwingungsunterdrückungs-Zielobjekts;

einen Sinuswellen-Erzeugungsabschnitt (203s) zum Erzeugen einer Sinuswelle;

einen Cosinuswellen-Erzeugungsabschnitt (203c) zum Erzeugen einer Cosinuswelle;

einen ersten Multiplikationsabschnitt (204s) zum Multiplizieren der Sinuswelle mit einem Schwingungsunterdrückungs-Zielobjektsignal, das in dem BPF (201) verarbeitet wird;

einen zweiten Multiplikationsabschnitt (204c) zum Multiplizieren des Schwinungsunterdrückungs-Zielobjektsignals mit der Cosinuswelle;

einen ersten Integrationsabschnitt (205s) zum Integrieren eines ersten multiplizierten Signals von dem ersten Multiplikationsabschnitt (204c);

einen zweiten Integrationsabschnitt (205c) zum Integrieren eines zweiten multiplizierten Signals von dem zweiten Multiplikationsabschnitt (204c);

einen ersten Quadrierabschnitt (206s) zum Quadrieren eines ersten Integrationssignals von dem ersten Integrationsabschnitt (205s);

einen zweiten Quadrierabschnitt (206c) zum Quadrieren eines zweiten Integrationssignals von dem zweiten Integrationsabschnitt (205c); und

einen Additionsabschnitt (207) zum Addieren eines ersten multiplizierten Signals von dem ersten Quadrierabschnitt (206s) und eines zweiten multiplizierten Signals von dem zweiten Quadrierabschnitt (206c) und zum Abgeben des Schwingungssignals, und

wobei eine Schwingungsunterdrückung des Schwingungsunterdrückungs-zielobjekts in einer Fortsetzung der vorbestimmten Frequenz von 5 bis 20 Hz des Schwingungssignals auf der Basis eines Ausdrucks einer Fourierreihe für gleich der oder länger als die vorbestimmte Zeit ausgeführt wird.

2. Steuereinheit für eine elektrische Servolenkung nach Anspruch 1,
wobei der erste Integrationsabschnitt (205s) und der zweite Integrationsabschnitt (205c) zu einem vorbestimmten Zeitraum initialisiert werden.

3. Steuereinheit für eine elektrische Servolenkung nach Anspruch 1 oder 2,
wobei die zu ändernde Verstärkung der PI-Steuerung eine proportionale Verstärkung oder eine integrale Verstärkung ist.

4. Steuereinheit für eine elektrische Servolenkung nach einem der Ansprüche 1 bis 3,
wobei die zu ändernde Verstärkung der PI-Steuerung eine proportionale Verstärkung und eine integrale Verstärkung ist.

**Revendications**

1. Dispositif de commande de direction assistée électrique effectuant une commande proportionnelle-intégrale (PI) d'une valeur de commande de courant calculée sur la base d'au moins un couple de direction, et commandant l'entraînement d'un moteur (20) au moyen d'une valeur de commande soumise à une commande PI et qui commande une direction assistée, comprenant :

une section de détection de vibrations (200) pour détecter une vibration d'un objet cible de suppression des vibrations et pour émettre un signal de vibration ;
une section d'évaluation du temps de poursuite (220) pour émettre un signal de poursuite lorsque ledit signal de vibration continue sur une durée égale ou supérieure à un temps prédéterminé ; et
une section de réglage de gain (230) pour modifier un gain de ladite commande PI en fonction dudit signal de poursuite,
**caractérisé en ce que**
ladite section de détection des vibrations (200) comprend :

un filtre passe-bande (BPF) (201) pour extraire une fréquence prédéterminée de 5 à 20 Hz dudit objet cible de suppression des vibrations ;
une section de génération d'ondes sinusoïdales (203s) pour générer une onde sinusoïdale ;
une section de génération d'ondes cosinusoïdales (203c) pour générer une onde cosinusoïdale ;
une première section de multiplication (204s) pour multiplier ladite onde sinusoïdale par le signal de l'objet cible de suppression des vibrations qui est traité dans ledit BPF (201) ;
une deuxième section de multiplication (204c) pour multiplier ledit signal de l'objet cible de suppression des vibrations par ladite onde cosinusoïdale ;
une première section d'intégration (205s) pour intégrer un premier signal multiplié de ladite première section de multiplication (204s) ;
une deuxième section d'intégration (205c) pour intégrer un deuxième signal multiplié de ladite deuxième section de multiplication (204c) ;
une première section de mise au carré (206s) pour mettre au carré un premier signal d'intégration de ladite première section d'intégration (205s) ;
une deuxième section de mise au carré (206c) pour mettre au carré un deuxième signal d'intégration de ladite deuxième section d'intégration (205c) ; et
une section d'addition (207) pour additionner un premier signal multiplié de ladite première section de mise au carré (206s) et un deuxième signal multiplié de ladite deuxième section de mise au carré (206c) et pour émettre ledit signal de vibration, et

une suppression de vibration dudit objet cible de suppression des vibrations est effectuée dans la continuité de la fréquence prédéterminée de 5 à 20 Hz dudit signal de vibration sur la base d'une expression des séries de Fourier pour une durée égale ou supérieure audit temps prédéterminé.

2. Unité de commande de direction assistée électrique selon la revendication 1, dans laquelle ladite première section d'intégration (205s) et ladite deuxième section d'intégration (205c) sont initialisées à une période prédéterminée.

3. Unité de commande de direction assistée selon la revendication 1 ou 2, dans laquelle ledit gain à modifier de ladite commande PI est un gain proportionnel ou un gain intégral.

4. Unité de commande de direction assistée selon l'une quelconque des revendications 1 à 3, dans laquelle ledit gain à modifier de ladite commande PI est un gain proportionnel et un gain intégral.

FIG.1

**1** — steering wheel
**2**
**10** TORQUE SENSOR
**3** REDUCTION GEARS
**20** MOTOR
**12** VEHICLE SPEED SENSOR
Vel
Th
**30** CONTROL UNIT (ECU)
**11**
Vref
**13** BATTERY
**4a**
**4b**
**5**
**6a**
**6b**
**7a**
**7b**
**8L**
**8R**

PRIOR ART

FIG.2

PRIOR ART

FIG.3

PRIOR ART

FIG.4

FIG.5

FIG.6

```
        ( START )
             │                    ( 2 )
             │◄──────────────────────┘
             ▼                              S1
   ┌─────────────────────────┐
   │  INPUT STEERING TORQUE   │
   └─────────────────────────┘
             │                              S2
             ▼
   ┌─────────────────────────┐
   │      BPF PROCESSING      │
   └─────────────────────────┘
             │                              S3
             ▼
   ┌─────────────────────────┐
   │    sin(ωt) GENERATE      │
   └─────────────────────────┘
             │                              S4
             ▼
   ┌─────────────────────────┐
   │    cos(ωt) GENERATE      │
   └─────────────────────────┘
             │                              S10
             ▼
   ┌─────────────────────────┐
   │  BPF OUTPUT × sin(ωt)    │
   └─────────────────────────┘
             │                              S11
             ▼
   ┌─────────────────────────┐
   │       INTEGRATION        │
   └─────────────────────────┘
             │                              S12
             ▼
   ┌─────────────────────────┐
   │         SQUARE           │
   └─────────────────────────┘
             │
             ▼
           ( 1 )
```

FIG.7

S20
BPF OUTPUT × cos(ωt)

S21
INTEGRATION

S22
SQUARE

S23
ADDITION

S24
INITIALIZATION TIME ?
No
Yes

S25
INITIALIZATION

S30
CONTINUATION VIBRATION ?
No
Yes

②

S40
CHANGE GAIN

END

FIG.8

FIG.9

FIG.10

FIG.11

```
                              ┌──────────┐
                              │  START   │
                              └────┬─────┘
                                   │                              ◄─────────────┐
                                   ▼           S31                              │
                         ┌──────────────────────┐                              │
                         │ INPUT VIBRATION SIGNAL│                              │
                         └───────────┬───────────┘                              │
                                     │          S32                             │
                         ┌───────────┴───────────┐                             │
                         │        STORING         │                             │
                         └───────────┬───────────┘                             │
                                     │                                          │
                                     ▼        S33                               │
                              ◇ 3-SAMPLINGS ? ◇────── No ──────────────────────┘
                                     │
                                    Yes
                                     ▼          S34
                         ┌───────────┴───────────┐
                         │ DETERMINE ymax、ymin    │
                         └───────────┬───────────┘
                                     │
                                     ▼        S35
                           ◇ ymin ≧ a·ymax ? ◇──── No ──────┐
                                     │                       │
                                    Yes                      ▼
                                     │              ┌─────────────┐
                                     │              │   RETURN    │
                                     │              └─────────────┘
                                     ▼        S36
                              ◇ y[k] > yth          ◇
                                y[k−1] > yth  ? ──── No ──────┐
                                y[k−2] > yth               │
                                     │                       ▼
                                    Yes              ┌─────────────┐
                                     │               │   RETURN    │
                                     │               └─────────────┘
                                     ▼          S37
                         ┌───────────┴───────────┐
                         │ OUTPUT CONTINUATION SIGNAL│
                         └───────────┬───────────┘
                                     │
                                     ▼
                              ┌──────────┐
                              │   END    │
                              └──────────┘
```

FIG.12

**EP 3 020 617 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006188183 A